# EUROPÄISCHE PATENTSCHRIFT

(11) **EP 1 641 885 B1**
(45) Veröffentlichungstag und Bekanntmachung des Hinweises auf die Patenterteilung: **18.02.2009**
(21) Anmeldenummer: 04739693.2
(22) Anmeldetag: 08.06.2004
(51) Int. Cl.: C09B 67/00, C09B 25/00

(54) **VERWENDUNG VON CHINALDIN-UND NAPHTHALINDERIVATEN ALS KRISTALLISATIONSMODIFIKATOREN**
USE OF QUINALDINE AND NAPHTHALINE DERIVATIVES AS CRYSTALLISATION MODIFIERS
UTILISATION DE DERIVES DE QUINALDINE ET DE NAPHTALINE COMME MODIFICATEURS DE L'ETAT DE CRISTALLISATION

(30) Priorität: 11.06.2003 DE 10326631
(43) Veröffentlichungstag der Anmeldung: 05.04.2006
(73) Patentinhaber: BASF SE, 67056 Ludwigshafen (DE)
(72) Erfinder: STOHR, Andreas, 67251 Freinsheim (DE); SCHRÖCK, Manfred, 67134 Birkenheide (DE)
(86) Internationale Anmeldenummer: PCT/EP2004/006164
(87) Internationale Veröffentlichungsnummer: WO 2004/108837

(56) Entgegenhaltungen:
- EP-A- 1 138 723
- WO-A-02/00643
- DE-A- 1 770 960
- DE-A- 2 638 528

## Beschreibung

Die vorliegende Erfindung betrifft die Verwendung von Verbindungen der allgemeinen Formel I 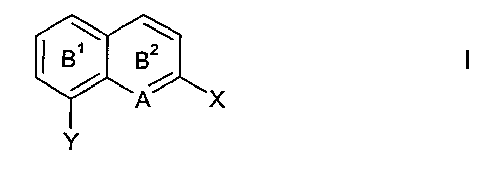 in der die Variablen folgende Bedeutung haben:
- A: =N- oder =CH-;
- X: für den Fall, daß A für =N- steht, Methyl oder einen Rest der Formel IIa 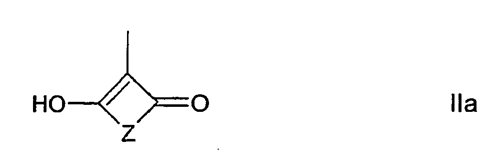 und für den Fall, daß A für =CH- steht, einen Rest R;
- Y: einen Rest R oder einen Rest der Formel IIb 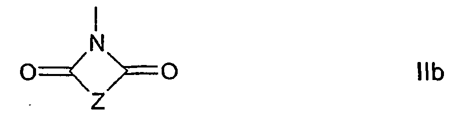 wobei entweder X für einen Rest der Formel IIa oder Y für einen Rest der Formel IIb steht;
- R: Wasserstoff, Halogen, C₁-C₄-Alkyl, -SO₃H, -SO₃⁻ Me⁺, -SO₃⁻ N⁺R¹R²R³R⁴, -SO₂NR¹R², -CH₂NR¹R², -CH₂R⁵, -COOH, -COO⁻ Me⁺, -COO⁻ N⁺R¹R²R³R⁴, -COOR⁶ oder -COR⁶;
- R¹, R², R³ und R⁴: unabhängig voneinander Wasserstoff; C₁-C₂₂-Alkyl oder C₂-C₂₂-Alkenyl, dessen Kohlenstoffkette jeweils durch eine oder mehrere Gruppierungen -O-, -S-, -NR⁷-, -CO- oder -SO₂- unterbrochen sein kann und/oder das ein- oder mehrfach durch Hydroxy, Halogen, Aryl, C₁-C₄-Alkoxy und/oder Acetyl substituiert sein kann; C₃-C₈-Cycloalkyl, dessen Kohlenstoffgerüst durch eine oder mehrere Gruppierungen -O-, -S-, -NR⁷- oder -CO- unterbrochen sein kann und/oder das ein- oder mehrfach durch Hydroxy, Halogen, Aryl, C₁-C₄-Alkoxy und/oder Acetyl substituiert sein kann; Hydroabietyl, Abietyl oder Aryl; R¹ und R² bzw. R¹, R² und R³ zusammen einen das Stickstoffatom enthaltenden, 5- bis 7-gliedrigen cyclischen Rest, der weitere Heteroatome enthalten kann;
- R⁵: einen Rest der Formel IIb' 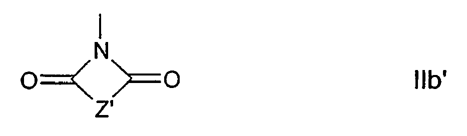
- R⁶: einen der Alkylreste R¹;
- R⁷: Wasserstoff oder C₁-C₄-Alkyl;
- Me: ein Alkalimetallion;
- Z und Z': unabhängig voneinander Arylen, das durch Halogen, -SO₃H, -SO₃⁻ Me⁺, -SO₃⁻ N⁺R¹R²R³R⁴ oder C₁-C₁₂-Alkyl ein- oder mehrfach substituiert sein kann, und
- die Ringe B¹ und B²: unabhängig voneinander zusätzlich durch einen oder mehrere gleiche oder verschiedene der nicht Wasserstoff bedeutenden Reste R substituiert sein können,
als Kristallisationsmodifikatoren für organische Pigmente.

Weiterhin betrifft die Erfindung ein Verfahren zur Überführung von organischen Rohpigmenten in eine feinteilige Pigmentform.

Außerdem betrifft die Erfindung Pigmentzubereitungen, die (A) mindestens ein organisches Pigment und (B) mindestens eine der Verbindungen der Formel I enthalten, sowie neue Verbindungen der Formel I'.

Organische Pigmente sind aufgrund ihrer Brillanz und Farbtonreinheit für eine Vielzahl von Anwendungen von besonderem Interesse. Dabei werden zunehmend höhere Anforderungen an ihr Eigenschaftsprofil gestellt. So sind z.B. für die Anwendung in Ink-Jet-Tinten, Farbfiltern und elektrographischen Tonern Feinteiligkeit und eine enge Teilchengrößenverteilung der Pigmente Voraussetzung.

Aufgrund ihrer Stabilität, insbesondere ihrer hohen Licht- und Wetterechtheit sowie Hitzebeständigkeit, stellen insbesondere Chinophthalonpigmente interessante Pigmente für den gelben Farbtonbereich dar. Als besonders wichtiger Vertreter dieser Pigmentklasse sei C.I. Pigment Yellow 138 genannt (DE-A-17 70 960). Weitere Chinophthalonpigmente sind in den DE-A-26 26 271, 26 38 528 und 27 06 872 beschrieben. Bei der Synthese fallen die Chinophthalonpigmente in grobkristalliner Form mit sehr heterogener Teilchengrößenverteilung an. Zur Überführung in eine für die Anwendung geeignete, koloristisch wertvolle Pigmentform werden diese Rohpigmente daher üblicherweise einer Formierung durch Mahlung und gegebenenfalls Rekristallisation unterzogen.

Aus der WO-A-02/00643 ist es bekannt, die Formierung in Gegenwart von spezifisch modifizierten Chinophthalonderivaten, also Umsetzungsprodukten der Pigmente selbst, durchzuführen. Diese Kristallisationsmodifikatoren müssen jedoch in einem zusätzlichen, sich an die Pigmentsynthese anschließenden Reaktionsschritt hergestellt werden.

Weiterhin werden in der EP-A-1 138 723 wasserlösliche Chinophthalonderivate, die einen 3-Hydroxyinden-1-on-2-ylrest enthalten, in Ink-Jet-Tinten eingesetzt.

Die Umsetzungsprodukte von alkyl- oder phenylsubstituiertem Aminochinaldin mit 1 mol Phthalsäureanhydrid sind aus der DE-A-26 38 528 als Zwischenprodukte für Gelbpigmente auf Basis von C.I. Pigment Yellow 138 bekannt.

Der Erfindung lag daher die Aufgabe zugrunde, diesem Nachteil abzuhelfen und Stoffe, die die Kristallisation organischer Pigmente vorteilhaft beeinflussen können, auf vorteilhafte, wirtschaftliche Weise bereitzustellen.

Demgemäß wurde die Verwendung der Verbindungen der eingangs definierten Formel I als Kristallisationsmodifikatoren für organische Pigmente gefunden.

Bevorzugte Verbindungen entsprechen den Chinaldin- und Aminochinaldinderivaten der Formel Ia und den Aminonaphthalinderivaten der Formel Ib, die jeweils den Unteransprüchen zu entnehmen sind.

Außerdem wurde ein Verfahren zur Überführung von organischen Rohpigmenten in eine feinteilige Pigmentform gefunden, das dadurch gekennzeichnet ist, daß man die Formierung des Rohpigments in Gegenwart einer oder mehrerer der Verbindungen der Formel I vornimmt.

Weiterhin wurden Pigmentzubereitungen gefunden, die (A) mindestens ein organisches Pigment und (B) mindestens eine Verbindung der Formel I enthalten.

Schließlich wurden die Verbindungen der Formel I' 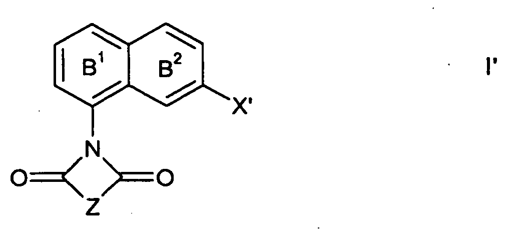 gefunden, in der die Variablen folgende Bedeutung haben:
- R: Wasserstoff, Halogen, C₁-C₄-Alkyl, -SO₃H, -SO₃⁻ Me⁺, -SO₃⁻ N⁺R¹R²R³R⁴, -SO₂NR¹R², -CH₂NR¹R², -CH₂R⁵, -COOH, -COO- N⁺R¹R²R³R⁴, -COOR⁶ oder -COR⁶;
- R¹, R², R³ und R⁴: unabhängig voneinander Wasserstoff; C₁-C₂₂-Alkyl oder C₂-C₂₂-Alkenyl, dessen Kohlenstoffkette jeweils durch eine oder mehrere Gruppierungen -O-, -S-, -NR⁷-, -CO- oder -SO₂- unterbrochen sein kann und/oder das ein- oder mehrfach durch Hydroxy, Halogen, Aryl, C₁-C₄-Alkoxy und/oder Acetyl substituiert sein kann; C₃-C₈-Cycloalkyl, dessen Kohlenstoffgerüst durch eine oder mehrere Gruppierungen -O-, -S-, -NR⁷- oder -CO- unterbrochen sein kann und/oder das ein- oder mehrfach durch Hydroxy, Halogen, Aryl, C₁-C₄-Alkoxy und/oder Acetyl substituiert sein kann; Hydroabietyl, Abietyl oder Aryl; R¹ und R² bzw. R¹,R² und R³ zusammen einen das Stickstoffatom enthaltenden, 5- bis 7-gliedrigen cyclischen Rest, der weitere Heteroatome enthalten kann;
- R⁵: einen Rest der Formel IIb' 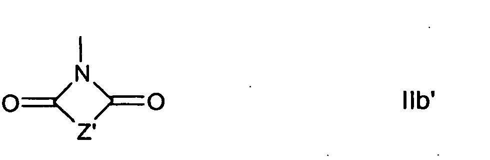
- R⁶: einen der Alkylreste R¹;
- R⁷: Wasserstoff oder C₁-C₄-Alkyl;
- Me: ein Alkalimetallion;
- Z und Z': unabhängig voneinander Arylen, das durch Halogen, -SO₃H, -SO₃⁻ Me⁺, -SO₃⁻ N⁺R¹R²R³R⁴, oder C₁-C₁₂-Alkyl ein- oder mehrfach substituiert sein kann, und
- die Ringe B¹ und B²: unabhängig voneinander zusätzlich durch einen oder mehrere gleiche oder verschiedene der nicht Wasserstoff bedeutenden Reste R substituiert sein können, wobei, für den Fall, daß A für =CH- steht, mindestens einer der beiden Ringe mindestens durch einen nicht Wasserstoff bedeutenden Rest R substituiert ist.

Die erfindungsgemäß zu verwendenden Kristallisationsmodifikatoren der Formel I können vorteilhaft in situ bei der Synthese von Chinophthalonpigmenten oder aus preiswerten Áusgangsmaterialien hergestellt werden. Obwohl sie die Molekülstruktur der Pigmente nur zum Teil oder sogar nur eine ähnliche Teilstruktur aufweisen, beeinflussen sie trotzdem die Kristallisation insbesondere von Chinophthalonpigmenten auf vorteilhafte Weise, was nicht zu erwarten war.

Alle in den Formeln I und II auftretenden Alkyl- und Alkenylreste können geradkettig oder verzweigt sein.

Als Beispiele für Alkylreste seien im einzelnen beispielhaft genannt: Methyl, Ethyl, Propyl, Isopropyl, Butyl, Isobutyl, sec.-Butyl, tert.-Butyl, Pentyl, Isopentyl, Neopentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl und Eicosyl (die obigen Bezeichnungen Isooctyl, Isononyl, Isodecyl und Isotridecyl sind Trivialbezeichnungen und stammen von den nach der Oxosynthese erhaltenen Alkoholen).

Als Beispiele für Alkylreste, deren Kohlenstoffkette durch eine oder mehrere Gruppierungen -O-, -S-, -NR⁷-, -CO- oder -SO₂- unterbrochen sein kann, bzw. für alkoxy- und alkanoylsubstituierte Alkylreste seien folgende Reste aufgeführt:
2-Methoxyethyl, 2-Ethoxyethyl, 2-Propoxyethyl, 2-Isopropoxyethyl, 2-Butoxyethyl, 2-und 3-Methoxypropyl, 2- und 3-Ethoxypropyl, 2- und 3-Propoxypropyl, 2- und 3- Butoxypropyl, 2- und 4-Methoxybutyl, 2- und 4-Ethoxybutyl, 2- und 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- und 4-Butoxybutyl, 4,8-Dioxadecyl, 3,6,9-Trioxadecyl, 3,6,9-Trioxaundecyl, 3,6,9-Trioxadodecyl, 3,6,9,12-Tetraoxatridecyl und 3,6,9,12-Tetraoxatetradecyl;
2-Methylthioethyl, 2-Ethylthioethyl, 2-Propylthioethyl, 2-Isopropylthioethyl, 2-Butylthioethyl, 2- und 3-Methylthiopropyl, 2- und 3-Ethylthiopropyl, 2- und 3-Propylthiopropyl, 2-und 3- Butyl-thiopropyl, 2- und 4-Methylthiobutyl, 2- und 4-Ethylthiobutyl, 2- und 4-Propylthiobutyl, 3,6-Dithiaheptyl, 3,6-Dithiaoctyl, 4,8-Dithianonyl, 3,7-Dithiaoctyl, 3,7-Dithianonyl, 4,7-Dithiaoctyl, 4,7-Dithianonyl, 2- und 4-Butylthiobutyl, 4,8-Dithiadecyl, 3,6,9-Trithiadecyl, 3,6,9-Trithia-undecyl, 3,6,9-Trithiadodecyl, 3,6,9,12-Tetrathiatridecyl und 3,6,9,12-Tetrathiatetradecyl;
2-Monomethyl- und 2-Monoethylaminoethyl, 2-Dimethylaminoethyl, 2- und 3-Dimethylaminopropyl, 3-Monoisopropylaminopropyl, 2- und 4-Monopropylaminobutyl, 2- und 4-Di-methylaminobutyl, 6-Methyl-3,6-diazaheptyl, 3,6-Dimethyl-3,6-diazaheptyl, 3,6-Diazaoctyl, 3,6-Dimethyl-3,6-diazaoctyl, 9-Methyl-3,6,9-triazadecyl, 3,6,9-Trimethyl-3,6,9-triazaundecyl, 12-Methyl-3,6,9,12-tetraazatridecyl und 3,6,9,12-Tetramethyl-3,6,9,12-tetraazatridecyl;
Propan-2-on-1-yl, Butan-3-on-1-yl, Butan-3-on-2-yl und 2-Ethylpentan-3-on-1-yl;
2-Methylsulfonylethyl, 2-Ethylsulfonylethyl, 2-Propylsulfonylethyl, 2-Isopropylsulfonylethyl, 2-Butylsulfonylethyl, 2- und 3-Methylsulfonylpropyl, 2- und 3-Ethylsulfonylpropyl, 2- und 3-Pro-pylsulfonylpropyl, 2- und 3-Butylsulfonylpropyl, 2- und 4-Methylsulfonylbutyl, 2- und 4-Ethyl-sulfonylbutyl, 2- und 4-Propylsulfonylbutyl und 4-Butylsulfonylbutyl.

Als Beispiele für C₂-C₂₂-Alkenylreste seien beispielhaft Oleyl, Linoleyl und Linolenyl genannt.

Beispiele für Alkoxyreste sind Methoxy, Ethoxy, Propoxy, Isopropoxy, Butoxy, Isobutoxy, sec.-Butoxy und tert.-Butoxy.

Als Cycloalkylreste seien beispielhaft Cyclopropyl, Cyclobutyl, Cyclopentyl, Cyclohexyl, Cycloheptyl und Cyclooctyl aufgeführt. Heteroatome enthaltende Cycloalkylreste sind z.B. Dioxanyl, Morpholinyl, Tetrahydrofuryl, Pyrrolidinyl und Piperidinyl.

Arylreste sind beispielsweise Phenyl und 1- und 2-Naphthyl.

Halogen bedeutet insbesondere Chlor oder Brom, wobei Chlor bevorzugt ist.

Substituierte Alkylreste weisen vorzugsweise eine Kette mit bis zu 12 , insbesondere 6 und vor allem 4 C-Atomen auf und tragen bevorzugt einen oder zwei Substituenten. Beispiele sind: 2-Hydroxyethyl, 2- und 3-Hydroxypropyl, 1-Hydroxyprop-2-yl und 2- und 4-Hydroxybutyl und Benzyl.

Als Beispiele für das Stickstoffatom enthaltende, aus R¹ und R² bzw. R¹ bis R³ gebildete 5- bis 7-gliedrige cyclische Reste, die benzanelliert sein können, seien genannt: Morpholinyl, Pyrrolidinyl, Piperidyl, Pyrryl, Pyridyl, Pyrimidyl, Pyrazolyl, Imidazolyl, Thiazolyl, Triazyl, Chinaldyl, Chinolinyl, Benzoxazolyl, Benzothiazolyl, Benzothiadiazolyl, Benzimidyzolyl und Isochinolyl.

Als Beispiele für Arylenreste und substituierte Arylenreste Z und Z' seien 1,2-Phenylen, Tetrachlor- und Tetrabrom-1,2-phenylen, 1,2-Naphthylen, 2,3-Naphthylen und 1,8-Naphthylen aufgeführt, wobei 1,2-Phenylen und Tetrachlor-1,2-phenylen bevorzugt sind.

Geeignete Alkoxycarbonylreste sind beispielsweise Methoxycarbonyl, Ethoxycarbonyl, Propoxycarbonyl, Butoxycarbonyl, Pentoxycarbonyl und Hexoxycarbonyl.

Beispiele für Acylreste sind Methylcarbonyl, Ethylcarbonyl, Propylcarbonyl, Butylcarbonyl und Pentylcarbonyl.

Als Beispiele für Arylsulfonylreste seien insbesondere Phenylsulfonyl und substituiertes Phenylsulfonyl wie p-Tolylsulfonyl, p-Chlorphenylsulfonyl und p-Bromphenylsulfonyl genannt.

Die Herstellung der Verbindungen der Formel I wird nachfolgend beispielhaft am Fall der Verbindungen la erläutert. Zur Herstellung der weiteren Verbindungen I sowie auch der Naphthalinderivate Ib, insbesondere auch der bevorzugten Naphthalinderivate der Formel Ib, in der R^{b1} einen Rest D bedeutet, kann analog vorgegangen werden.

Die Aminochinaldinderivate der Formel la, in der X^{a} Methyl und Y^{a} einen Rest der Formel IIb bedeutet, kann ausgehend von 8-Aminochinaldin erfolgen.

Die am Chinaldinringsystem unsubstituierten Aminochinaldinderivate la können dabei direkt durch Umsetzung von 8-Aminochinaldin mit dem entsprechenden Phthalsäureanhydrid erhalten werden. Die substituierten Aminochinaldinderivate la sind entweder durch Umsetzung von substituiertem 8-Aminochinaldin mit dem entsprechenden Phthalsäureanhydrid oder durch anschließende Substitutionsreaktion am Umsetzungsprodukt von unsubstituiertem 8-Aminochinaldin und Phthalsäureanhydrid herstellbar.

Nach beiden Verfahrensvarianten können z.B. durch Umsetzung mit Oleum Aminochinaldinderivate der Formel la, in der R^{a1} -SO₃H bedeutet, hergestellt werden.

Analog kann die Herstellung von Chinaldinderivaten der Formel Ia, in der X^{a} einen Rest der Formel IIa und Y^{a} Wasserstoff, Chlor oder C₁-C₄-Alkyl bedeutet, ausgehend von Chinaldin erfolgen. Durch Umsetzung mit Oleum sind hier Chinaldinderivate der Formel la erhältlich, in der R^{a2} -SO₃H bedeutet.

Zweckmäßigerweise wird für diese Sulfonierungen ein Oleum verwendet, das einen Schwefeltrioxidgehalt von 0,1 bis 65 Gew.-%, insbesondere von 5 bis 25 Gew.-%, aufweist.

Die Menge an Oleum ist an sich nicht kritisch. Da das Oleum gleichzeitig als Lösungsmittel dient, sollte mindestens so viel Oleum eingesetzt werden, daß die Lösung rührbar bleibt. Üblicherweise kommen 1 bis 10 g, bevorzugt etwa 3 bis 7 g, Oleum je g zu sulfonierender Verbindung zum Einsatz.

Die Reaktionstemperatur liegt in der Regel bei 0 bis 200°C, vorzugsweise bei 50 bis 130°C.

Die Reaktionszeit kann 1 bis 20 h betragen. Im allgemeinen ist die regioselektiv erfolgende Sulfonierung in etwa 8 h beendet.

Die Isolierung des Produkts erfolgt üblicherweise nach Hydrolyse des Reaktionsgemisches in Eiswasser durch Abfiltrieren.

Durch weitere Umsetzung mit Aminen oder quartären Ammoniumsalzen können die sulfonierten Aminochinaldin- und Chinaldinderivate la in die entsprechenden Ammoniumsalze Ia überführt werden (R^{a1} bzw. R^{a2}: -SO₃⁻ N⁺R¹R²R³R⁴), die die Bildung von besonders gut dispergierbaren Pigmenten bewirken.

Als Amine kommen primäre, sekundäre und tertiäre Amine in Betracht. Die sekundären und tertiären Amine können jeweils gleiche oder verschiedene Alkylgruppen enthalten. Geeignet sind beispielsweise auch Fettamine mit linearen, hydrierten oder ungesättigten Alkylresten. Insbesondere kürzere Alkylreste mit bis zu 6 C-Atomen können auch verzweigt sein und/oder bis zu 2 Substituenten aus der bevorzugten Gruppe Hydroxy, Acetyl, Methoxy, Ethoxy, Chlor und Brom tragen.

Beispiele für besonders bevorzugte Amine und Ammoniumsalze sind Stearylamin, Methyldistearylamin, Dimethylstearylamin und Hydroabietylamin und Dimethyldistearylammoniumsalze.

Die Ammoniumsalzbildung kann auf allgemein übliche Weise in organischen Lösungsmitteln, Wasser oder wäßrig/organischem Medium vorgenommen werden. Geeignete Umsetzungstemperaturen liegen in der Regel bei 20 bis 100°C. Das Produkt kann ebenfalls durch Abfiltrieren isoliert werden.

Das Ammoniumsalz kann jedoch auch erst bei dem erfindungsgemäßen, eine Mahlung und eine Rekristallisation umfassenden Pigmentformierungsverfahren erzeugt werden, indem etwa äquimolare Mengen der Aminochinaldin- bzw. Chinaldinsulfonsäure la und des Amins bzw. Ammoniumsalzes bei einem der beiden Formierungsschritte zugegeben werden.

Die entsprechenden Alkalimetallsalze (R^{a1} bzw. R^{a2}: -SO₃⁻ Me⁺, wobei Me bevorzugt Natrium oder Kalium, besonders bevorzugt Natrium bedeutet), sind durch Neutralisation der Sulfonsäurederivate mit den entsprechenden Alkalimetallbasen zugänglich.

Die Herstellung von Aminochinaldin- und Chinaldinderivaten der Formel Ia, in der R^{a1} bzw. R^{a2} -SO₂NR¹R² bedeutet, kann vorteilhaft durch Sulfochlorierung und anschließende Amidierung erfolgen.

Die Sulfochlorierung kann analog zur Sulfonierung unter Einsatz von Chlorsulfonsäure vorgenommen werden. Zweckmäßigerweise setzt man das erhaltene Produkt zusätzlich noch mit Thionylchlorid um, um sicherzustellen, daß alle Sulfonsäuregruppen in das Säurechlorid überführt worden sind.

Die Menge an Chlorsulfonsäure ist ebenfalls an sich nicht kritisch. Um jedoch rührbare Lösungen zu erhalten, werden üblicherweise 1 bis 10 g, vorzugsweise etwa 4 g, Chlorsulfonsäure je g zu sulfochlorierender Verbindung verwendet.

In der Regel wird diese Reaktion bei 80 bis 180°C, bevorzugt bei 100 bis 130°C, durchgeführt und dauert etwa 1 bis 20 h, vorzugsweise etwa 2 bis 10 h.

Wird das Produkt nachträglich noch mit Thionylchlorid umgesetzt, so wird das erhaltene Reaktionsgemisch zweckmäßigerweise auf etwa 70 bis 80°C abgekühlt, und dann werden im allgemeinen 0,3 bis 1 g, insbesondere 0,4 bis 0,7 g, Thionylchlorid je g zu sulfochlorierender Verbindung zugegeben.

Nach einer weiteren Reaktionszeit von in der Regel 0,5 bis 2 h kann das regioselektiv monosulfochlorierte Produkt nach Hydrolyse in Eiswasser durch Abfiltrieren isoliert werden. Üblicherweise wird es dann ohne vorherige Trocknung der Amidierung zugeführt.

Die Amidierung wird mit einem primären oder einem sekundären Amin durchgeführt. Bevorzugt werden die oben aufgeführten Amine für die Umsetzung verwendet.

Vorzugsweise wird die Amidierung in annähernd neutralem, wäßrigem Medium vorgenommen. Um einen pH-Wert von etwa 7 einzuhalten, empfiehlt es sich in Gegenwart eines Puffers, z.B. Natriumdihydrogenphosphat/Dinatriumhydrogenphosphat, zu arbeiten.

Üblicherweise wird die Amidierung bei einer Temperatur von 0 bis 20°C vorgenommen und dauert etwa 0,5 bis 5 h, insbesondere 1 bis 3 h.

Die Aminochinaldin- und Chinaldinderivate der Formel Ia, in der R^{a1} bzw. R^{a2} -CH₂NR¹R² oder -CH₂R⁵ bedeuten, können durch Methylamidierung in einer Tscherniac-Einhorn-Reaktion erhalten werden.

So können die bevorzugten Phthalimidomethylderivate la durch Umsetzung mit Paraformaldehyd und Phthalimid in konzentrierter Schwefelsäure oder in Oleum, das 0,1 bis 10 Gew.-%, bevorzugt 3 Gew.-%, Schwefeltrioxid enthalten kann, hergestellt werden.

In der Regel werden 0,05 bis 0,2 g, vorzugsweise 0,06 bis 0,1 g, Paraformaldehyd und 0,1 bis 0,3 g, bevorzugt 0,2 bis 0,25 g, Phthalimid je g zu aminomethylierender Verbindung eingesetzt.

Die Menge an Schwefelsäure bzw. Oleum ist an sich nicht kritisch. Im allgemeinen kommen 1 bis 10 g, insbesondere etwa 5 g, je g zu aminomethylierender Verbindung zum Einsatz.

Zweckmäßigerweise geht man bei dieser Umsetzung verfahrenstechnisch so vor, daß man Schwefelsäure bzw. Oleum vorlegt, Phthalimid und Paraformaldehyd abwechselnd zugibt und nach einer Reaktionszeit von etwa 0,5 bis 2 h bei 40 bis 60°C die zu aminomethylierende Verbindung zusetzt und das Gemisch dann etwa 2 bis 5 h bei 80 bis 120°C reagieren läßt.

Die Isolierung des Produkts erfolgt üblicherweise nach Hydrolyse des Reaktionsgemisches in Wasser durch Abfiltrieren.

Die Aminochinaldin- und Chinaldinderivate der Formel Ia, in der R^{a1} bzw. R^{a2} -COR⁶ oder C₁-C₄-Alkyl bedeuten, können durch übliche Friedel-Crafts-Acylierung bzw. Friedel-Crafts-Alkylierung der unsubstituierten Derivate der Formel la erhalten werden. Aminochinaldin- und Chinaldinderivate der Formel Ia, in der R^{a1} bzw. R^{a2} -COOH oder -COOR⁶ bedeuten, sind durch Friedel-Crafts-Acylierung der unsubstituierten Derivate der Formel la und anschließende Umsetzung mit Wasser bzw. Alkoholen erhältlich.

Die erfindungsgemäß zu verwendenden Verbindungen I eignen sich hervorragend als Kristallisationsmodifikatoren für organische Pigmente. Sie ermöglichen eine Überführung des Rohpigments in eine für die Anwendung geeignete, feinteilige Pigmentform mit enger Teilchengrößenverteilung.

Besondere Bedeutung haben sie als Kristallisationsmodifikatoren für Chinophthalonpigmente, bevorzugt für Chinophthalonpigmente der allgemeinen Formel III 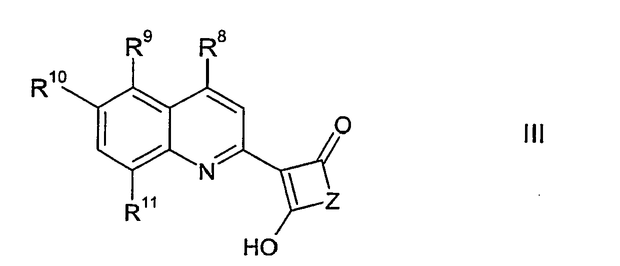 in der die Variablen folgende Bedeutung haben:
- R⁸: Wasserstoff, Halogen oder C₁-C₄-Alkyl;
einer der Reste R⁹, R¹⁰ und R¹¹ einen Rest der Formel IIb' 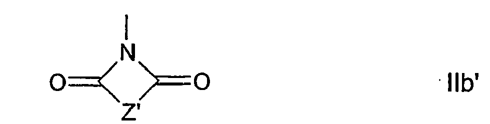 und die anderen Reste R⁹ bis R¹¹ Wasserstoff;
- Z und Z': unabhängig voneinander Arylen, das durch Halogen, -SO₃H, -SO₃⁻ Me⁺, -SO₃⁻ N⁺R¹R²R³R⁴ oder C₁-C₁₂-Alkyl ein- oder mehrfach substituiert sein kann,
besonders bevorzugt für Chinophthalonpigmente der Formel III, in der R⁸, R⁹ und R¹⁰ Wasserstoff bedeuten, und ganz besonders bevorzugt für C.I. Pigment Yellow 138.

Bei dem erfindungsgemäßen Verfahren zur Überführung von organischen Rohpigmenten, insbesondere von Chinophthalonrohpigmenten, in eine feinteilige Pigmentform wird die Formierung des Rohpigments in Gegenwart einer oder mehrerer Verbindungen I vorgenommen.

Eine bevorzugte Variante des erfindungsgemäßen Verfahrens besteht darin, daß man das bei der Synthese anfallende Rohpigment einer Mahlung, vorzugsweise in Abwesenheit von Mahlhilfsmitteln, unterzieht und das erhaltene Mahlgut anschließend in Gegenwart einer oder mehrerer Verbindungen I in einem organischen Lösungsmittel oder einem Gemisch aus organischem Lösungsmittel und Wasser rekristallisiert.

Eine zweite bevorzugte Variante besteht darin, bereits die Mahlung in Gegenwart einer oder mehrerer Verbindungen I vorzunehmen und das erhaltene Mahlgut anschließend in einem organischen Lösungsmittel oder einem Gemisch aus organischem Lösungsmittel und Wasser zu rekristallisieren.

Selbstverständlich kann man die Verbindungen I auch in Teilportionen in unterschiedlichen Phasen des Formierungsprozesses zugeben.

Es ist auch möglich, die Mahlung direkt in Gegenwart eines rekristallisierend wirkenden Lösungsmittels, z.B. von C₂-C₄-Alkanolen, Glykolen, Glykolethern und Phthalsäuredialkylestem, insbesondere Phthalsäurediethylester und vor allem Phthalsäuredimethylester, vorzunehmen. In diesem Fall kann der nachfolgende Rekristallisationsschritt unterbleiben.

Außerdem kann man bereits die Herstellung des Rohpigments vorteilhaft in Gegenwart der Verbindungen I vornehmen und die anfallende Mischung von Rohpigment und Verbindung I dann der Formierung zuführen.

Schließlich kann man Rohpigment und Verbindung I auch parallel in situ herstellen.

Im allgemeinen werden 0,1 bis 15 Gew.-%, bevorzugt 1 bis 10 Gew.-%, der Verbindung(en) I, bezogen auf das Rohpigment, eingesetzt.

Die Mahlung kann in einer Kugelmühle, Schwingmühle, Planetenmühle oder Rührwerkskugelmühle durchgeführt werden. Geeignete Mahlkörper sind z.B. Eisenkugeln, Silicium/Aluminium/Zirkonoxidperlen, Glasperlen, Achatkugeln und Sandkörner, die Durchmesser im Bereich von 0,1 bis 5 cm aufweisen können.

Vorzugsweise wird so lange gemahlen, bis das Mahlgut eine mittlere Primärteilchengröße von < 30 nm aufweist. Dementsprechend beträgt die Mahldauer üblicherweise 5 bis 60 h, insbesondere 20 bis 50 h.

Für die Rekristallisation kann eine Vielzahl von organischen Lösungsmitteln verwendet werden.

Geeignete Lösungsmittel sind Alkohole insbesondere mit bis zu 10 C-Atomen, Etheralkohole, Ether, Ketone, Carbonsäuren insbesondere mit bis zu 4 C-Atomen, Carbonsäureamide, Carbonsäureester sowie alicyclische und aromatische Kohlenwasserstoffe. Selbstverständlich können auch Mischungen dieser Lösungsmittel eingesetzt werden. Als Beispiele seien im einzelnen genannt:
Methanol, Ethanol, Propanol, Isopropanol, Butanol, Isobutanol, tert.-Butanol, Amylalkohol, Isoamylalkohol, Hexanol, Isohexanol, Heptanol, Octanol, 2-Ethylhexanol, Ethylenglykol, 1,2- und 1,3-Propylenglykol, Cyclohexanol, Methylcyclohexanol, Benzylalkohol und 2-Phenylethanol;
Ethylenglykolmonomethyl-, -ethyl- und -butylether und Diethylenglykolmonomethyl- und -ethylether;
Dipropylether, Diisoproylether, Dibutylether, Diisobutylether, Tetrahydrofuran, Dioxan, Diethylenglykoldimethyl- und -diethylether;
Aceton, Methylethylketon, Methylpropylketon, Methylbutylketon, Diethylketon, Methylisopropylketon, Methylisobutylketon, Cyclopentanon, Cyclohexanon, Methylcyclohexanon, Acetophenon und Propiophenon;
Ameisensäure, Essigsäure, Propionsäure und Buttersäure;
Formamid, N,N-Dimethyl- und N,N-Diethylformamid, N,N-Dimethyl- und N,N-Diethylacetamid, N,N-Dimethyl- und N,N-Diethylpropionsäureamid und N-Methylpyrrolidon;
Phthalsäuredimethylester und Phthalsäurediethylester;
Cyclohexan, Benzol, Toluol, Xylol, Mesitylen, Ethylbenzol, Chlorbenzol, o-Dichlorbenzol, Trichlorbenzol, Naphthalin und Methylnaphthalin.

Bevorzugt werden für die Rekristallisation solche Lösungsmittel verwendet, die sich bei der Aufarbeitung leicht entfernen lassen, z.B. durch Auswaschen mit Wasser, azeotrope Destillation mit Wasser, Wasserdampfdestillation oder durch Trocknen des gesamten Ansatzes (beispielsweise durch Abdestillieren des Lösungsmittels).

Besonders bevorzugt werden solche Lösungsmittel eingesetzt, die einen Siedepunkt von ≤ 150°C haben und sich unzersetzt und rückstandsfrei verdampfen lassen, z.B. C₁-C₅-Alkanole, Ketone wie Methylethylketon, Ether wie Tetrahydrofuran und Dioxan und Kohlenwasserstoffe wie Cyclohexan, Benzol, Toluol, Xylol und Chlorbenzol und deren Gemische, wobei Xylol und Toluol ganz besonders bevorzugt sind.

Die Menge an Lösungsmittel ist im allgemeinen nicht kritisch und kann innerhalb weiter Grenzen variiert werden. In der Regel kommen 3 bis 6 g, vorzugsweise 4 bis 5 g, Lösungsmittel je g Mahlgut zum Einsatz.

Üblicherweise nimmt man die Rekristallisation bei einer Temperatur von 25 bis 160°C, insbesondere 60 bis 140°C, vor.

Die Rekristallisation kann unter Dispergieren des Mahlgutes im Lösungsmittel oder auch durch einfaches Verweilenlassen des Mahlgutes im Lösungsmittel erfolgen. Bevorzugt wird die Mischung aus Mahlgut und Lösungsmittel gerührt.

Die Dauer des Rekristallisationsschritts hängt von der Temperatur und dem Lösungsmittel ab. In der Regel ist die Rekristallisation in 1 bis 10 h beendet.

Mithilfe des erfindungsgemäßen Formierungsverfahrens kann die mittlere Teilchengröße der erhaltenen Pigmente gezielt über die Menge an Verbindung I variiert und auf den jeweils gewünschten Wert < 150 nm eingestellt werden. Analog ist auch die BET-Oberfläche im Bereich von 30 bis 120 m²/g gezielt steuerbar.

Die Verteilung der feinteiligen Pigmente im Anwendungsmedium kann unterstützt werden, wenn bei der Formierung (bei der Mahlung und/oder der Rekristallisation) weitere übliche Pigmenthilfsmittel zugesetzt werden. Kommen solche Hilfsmittel zum Einsatz, so liegt ihre Menge üblicherweise bei 0,5 bis 30 Gew.-%, insbesondere 1 bis 10 Gew.-%.

Die beim erfindungsgemäßen Formierungsverfahren erhaltenen organischen Pigmente und dementsprechend die ebenfalls erfindungsgemäßen Pigmentzubereitungen, die (A) mindestens ein organisches Pigment und (B) mindestens eine Verbindung der Formel I sowie gewünschtenfalls eine Komponente (C) enthalten, zeichnen sich durch ihre Feinteiligkeit und ihre große Oberfläche aus und sind damit für vielfältige Anwendungen geeignet.

Von besonderem Interesse sind die erfindungsgemäß erhaltenen Chinophthalonpigmente, die sich durch ihre hervorragenden koloristischen und rheologischen Eigenschaften sowie Echtheiten, insbesondere durch hohe Transparenz, hohe Farbstärke und hohen Glanz, leichte Dispergierbarkeit und einwandfreie Überlackier-, Lösungsmittel- und Wetterechtheit, auszeichnen. Bei Anwendung in Alkyd/Melamin-Einbrennlacken werden üblicherweise folgende koloristische Parameter erreicht: Hue: 92 bis 96°; Helligkeit L ≥ 80; Chroma C ≥ 80; Transparenz, gemessen in Streu-Delta-E ≤ 95 bis etwa 40.

Sie eignen sich vorteilhaft zur Einfärbung einer Vielzahl von Anwendungsmedien, z.B. von Kunststoffen, lösungsmittelhaltigen und wasserbasierenden Lacken und aufgrund ihrer Transparenz vor allem auch von Druckfarben, die bei allen gängigen Druckverfahren, z.B. im Offsetdruck, Tiefdruck, Verpackungsdruck, Blechdruck und Textildruck, zum Einsatz kommen können. Insbesondere können sie aufgrund ihrer Feinteiligkeit auch in Ink-Jet-Tinten, Farbfiltern und elektrophotographischen Tonern und Entwicklern, z.B. Ein-, Zwei- und Mehrkomponentenpulvertonern (auch Ein- oder Zweikomponenten-Entwickler genannt), Magnettonem, Flüssigtonern, Polymerisationstonem und Spezialtonern eingesetzt werden. Selbstverständlich können sie dabei auch in Kombination mit weiteren Farbmitteln, z.B. mit Mono- und Diazo- und Isoindolinpigmenten wie C.I. Pigment Yellow 12, 13, 14, 17, 139 und 185, zum Einsatz kommen.

### Beispiele

### A) Herstellung von Verbindungen der Formel I

### Beispiel 1

a) 50 g 8-Aminochinaldin wurden portionsweise unter Rühren in 250 g auf etwa 10°C gekühltes 11 gew.-%iges Oleum eingetragen. Das Gemisch wurde dann auf 90°C erhitzt und 3 h bei dieser Temperatur gerührt.
   Nach Abkühlen auf 25°C wurde das Reaktionsgemisch in 1400 ml Wasser gegeben. Das auf diese Weise ausgefällte Produkt wurde abfiltriert, mit VE-Wasser bis zum Erreichen eines pH-Wertes von 4 gewaschen und im Vakuumtrockenschrank bei 40°C getrocknet.
   Es wurden 59,4 g 8-Aminochinaldin-5-sulfonsäure erhalten, was einer Ausbeute von 79% entspricht.
b) Eine Mischung aus 100 g Phenol, 34 g der in Schritt a) erhaltenen 8-Aminochinaldin-5-sulfonsäure und 49 g Tetrachlorphthalsäureanhydrid wurde auf 180°C erhitzt und 8 h bei dieser Temperatur gerührt. Das entstehende Reaktionswasser wurde über einen Wasserabscheider ausgekreist. Nach Abkühlen des Reaktionsgemisches auf 90°C und Zutropfen von 300 ml Methanol wurde das entstandene Produkt bei 60°C abfiltriert, bis zum Klarlauf mit Methanol gewaschen und im Vakuumtrockenschrank bei 40°C getrocknet.
   Es wurden 52,9 g des Aminochinaldinderivates Ia' erhalten, was einer Ausbeute von 73% entspricht. 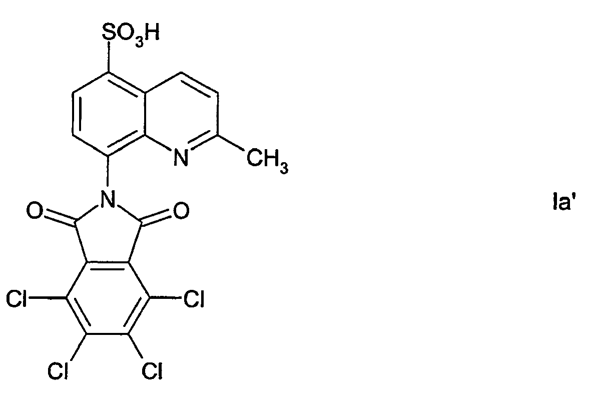
Analytische Daten:
¹H-NMR (DMSO): δ = 9,27 (d, 1H); 8,1 (d, 1H); 7,85 (d, 1H); 7,65 (d, 1H); 2,61 (s, 3H) ppm;
Masse (TOF MS ES+): m/z = 507 [M-H⁺, 100%].

### Beispiel 2

Eine Mischung aus 237 g Phenol, 118,5 g 8-Aminochinaldin und 214,5 g Tetrachlorphthalsäureanhydrid wurde auf 140°C erhitzt und 4 h bei dieser Temperatur gerührt. Das entstehende Reaktionswasser wurde über einen Wasserabscheider ausgekreist. Nach Abkühlen des Reaktionsgemisches auf 90°C und Zugabe von 300 ml Methanol wurde das entstandene Produkt bei 60°C abfiltriert, bis zum Klarlauf mit Methanol gewaschen und im Vakuumtrockenschrank bei 100°C getrocknet.

Es wurden 331,8 g des Aminochinaldinderivates la" erhalten, was einer Ausbeute von 98% entspricht. 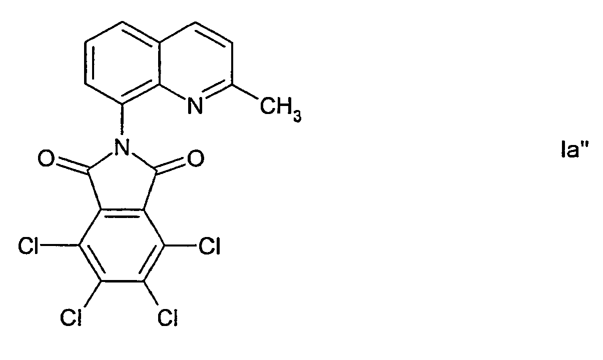 Analytische Daten:
¹H-NMR (DMSO): δ = 8,52 (d, 1H); 8,20 (d, 1H); 7,90 (d, 1H); 7,77 (t, 1H); 7,6 (d, 1H); 2,61 (s, 3H) ppm.

### Beispiel 3

Zu einer Mischung von 265 g Phenol und 286 g Tetrachlorterephthalsäureanhydrid wurden bei 150°C 172 g Chinaldin gegeben. Nach vierstündigem Rühren bei dieser Temperatur, Abkühlen des Reaktionsgemisches auf 90°C und Zutropfen von 300 ml Methanol wurde das entstandene Produkt bei 60°C abfiltriert, bis zum Klarlauf mit Methanol gewaschen und im Vakuumtrockenschrank bei 40°C getrocknet.

Es wurden 346,8 g des Chinaldinderivates Ia"' erhalten, was einer Ausbeute von 84% entspricht. 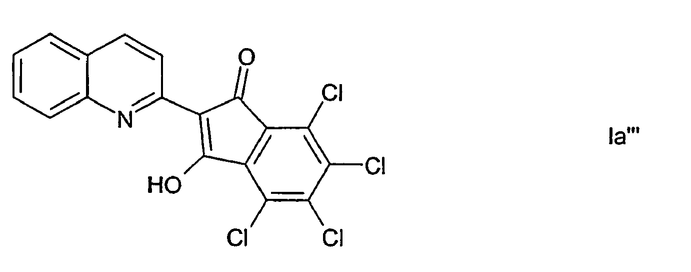 Analytische Daten:
¹H-NMR (D₂SO₄): δ = 8,42 (d, 1H); 8,02 (d, 1H); 7,65 (m, 3H); 7,42 (m, 1H) ppm.

### Beispiel 4

Eine Mischung aus 100 g Phenol, 50 g 1-Aminonaphthalin-6-sulfonsäure und 67 g Tetrachlorphthalsäureanhydrid wurde auf 180°C erhitzt und 8 h bei dieser Temperatur gerührt. Das entstehende Reaktionswasser wurde über einen Wasserabscheider ausgekreist. Nach Abkühlen des Reaktionsgemisches auf 90°C und Zutropfen von 300 ml Methanol wurde das entstandene Produkt bei 60°C abfiltriert, bis zum Klarlauf mit Methanol gewaschen und im Vakuumtrockenschrank bei 40°C getrocknet.

Es wurden 52,9 g des Aminonaphthalinderivates Ib' erhalten, was einer Ausbeute von 73% entspricht. 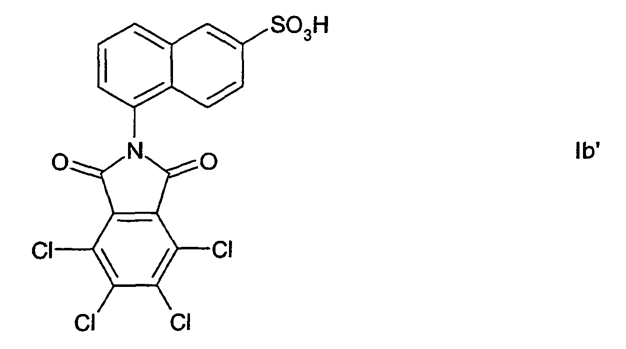 Analytische Daten:
IR (KBr): ν = 3050 (C-H-Aromat); 1783, 1726 (C=O); 1597, 1505 (C-C-Aromat); 1171, 1030 (S=O) cm⁻¹.

### B) Herstellung und Anwendung von erfindungsgemäßen Pigmentzubereitungen

### Beispiel 5 bis 14

### Variante A

In einer Schwingmühle (1l Volumen) wurden 100 g C.I. Pigment Yellow 138 in Form des gemäß Beispiel 1 der DE-A-17 70 960 erhaltenen Rohpigments mit ca. 1900 g Eisenkugeln (Durchmesser 2 cm) 40 h auf einem Schwingbock behandelt.

Ein Gemisch aus 97 g des Mahlgutes, x g einer der Verbindungen aus Beispiel 1 bis 4, y g des Amins A und 300 g Xylol wurde dann 5 h bei 125°C gerührt. Das Lösungsmittel wurde anschließend bei 125°C im Vakuum abdestilliert, und das Produkt wurde bis zum Erreichen eines Xylolgehaltes < 0,1% getrocknet.

### Variante B

Die Mahlung wurde analog Variante A durchgeführt, jedoch wurden 97 g des Rohpigments in Gegenwart von x g einer der Verbindungen aus Beispiel 1 bis 4 gemahlen.

Das erhaltene Mahlgut wurde analog Variante A unter Zusatz von y g des Amins A in Xylol rekristallisiert.

### Variante C

C.I. Pigment Yellow 138 wurde in Gegenwart einer der Verbindungen aus Beispiel 1 bis 4 hergestellt.

Dazu wurde eine Mischung aus 265 g Phenol, 450 g Tetrachlorterephthalsäureanhydrid und x g einer der Verbindungen aus Beispiel 1 bis 4 auf 180°C erhitzt. Bei dieser Temperatur wurden 112 g geschmolzenes 8-Aminochinaldin zugetropft. Das Reaktionsgemisch wurde anschließend 8 h bei dieser Temperatur gerührt, und das entstehende Reaktionswasser wurde über einen Wasserabscheider ausgekreist. Nach Abkühlen des Reaktionsgemisches auf 90°C und Zutropfen von 300 ml Methanol wurde das entstandene Produkt bei 60°C abfiltriert, bis zum Klarlauf mit Methanol gewaschen und im Vakuumtrockenschrank bei 40°C getrocknet.

Das erhaltene Rohpigment wurde anschließend analog Variante A gemahlen und unter Zusatz von y g des Amins A in Xylol rekristallisiert.

### Variante D

C.I. Pigment Yellow 138 wurde in Gegenwart einer Vorstufe V der Verbindungen aus Beispiel 1 bis 4 hergestellt. Als Vorstufe V wurden dabei 8-Aminochinaldin-5-sulfonsäure (Beispiel 11), 8-Aminochinaldin (Beispiel 12), Chinaldin (Beispiel 13) bzw. 1-Aminonaphthalin-6-sulfonsäure (Beispiel 14) eingesetzt.

Eine Mischung aus 265 g Phenol, u g Tetrachlorterephthalsäureanhydrid (TPSA) und x g der Vorstufe V wurde auf 180°C erhitzt. Bei dieser Temperatur wurden w g geschmolzenes 8-Aminochinaldin (AC) zugetropft. Das Reaktionsgemisch wurde anschließend 8 h bei dieser Temperatur gerührt, und das entstehende Reaktionswasser wurde über einen Wasserabscheider ausgekreist. Nach Abkühlen des Reaktionsgemisches auf 90°C und Zutropfen von 300 ml Methanol wurde das entstandene Produkt bei 60°C abfiltriert, bis zum Klarlauf mit Methanol gewaschen und im Vakuumtrockenschrank bei 40°C getrocknet.

Das erhaltene Rohpigment wurde anschließend analog Variante A gemahlen und unter Zusatz von y g des Amins A in Xylol rekristallisiert.

Bei allen Varianten wurde das formierte Pigment anschließend pulverisiert und geprüft.

In allen Fällen zeigte das erhaltene, formierte C.I. Pigment Yellow 138 bei elektronenmikroskopischer Untersuchung eine mittlere Teilchengröße (d₅₀-Wert) < 150 nm. Die BET-Oberfläche betrug von 30 bis 120 m²/g.

Das jeweils erhaltene Pigment war sehr leicht in allen Anwendungsmedien dispergierbar. Bei Einarbeitung in einen Alkyd/Melamin-Einbrennlack wurde ein transparenter, sehr grünstichiger, brillanter Gelbfarbton erhalten.

Zur Bestimmung der Koloristik wurden Buntpasten hergestellt, indem 1,0 g des jeweils erhaltenen Pigments und 9,0 g eines Alkyd-Melamin-Einbrennlacks (35 gew.%ig in Xylol) mit 10 ml Glasperlen (Durchmesser 3 mm) in einer 30 ml-Glasflasche 60 min auf einem Skandex-Dispergieraggregat geschüttelt wurden. 1,6 g der jeweiligen Buntpaste wurden dann mit 1,0 g einer 40 gew.-%ig mit Titandioxid (Kronos 2310) pigmentierten Weißpaste (Weißaufhellung ca. 1/3 Standardfarbtiefe) gemischt, als 150 µm dicke Schicht auf ein Blech aufgetragen, abgelüftet und 30 min bei 130°C eingebrannt. Die CIELAB-Farbwerte H (Farbwinkel), C (Chroma) und L (Helligkeit) wurden anschließend mit einem Spektralphotometer Spectraflash SF 600 Plus (Fa. Datacolor) bestimmt.

Die Bestimmung der Farbstärke (Angabe der Färbeäquivalente FAE) erfolgt ebenfalls in der Weißaufhellung. Der Ausfärbung mit dem in Abwesenheit der Verbindungen I formierten Pigment wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

Zur Bestimmung der Transparenz wurde die oben beschriebene Buntpaste in einer Schichtdicke von 200 µm über einen Schwarz-Weiß-Karton abgerackelt und nach der Trocknung das Streu-Delta-E über Schwarz gegenüber der Vergleichsprobe mit dem in Abwesenheit der Verbindungen I formierten Pigment bestimmt. Negative Werte bedeuten eine höhere Transparenz.

Einzelheiten zu diesen Versuchen sowie die Ergebnisse der Messungen sind Tabelle 1 und 2 zu entnehmen.

Dabei wurden folgende Bezeichnungen verwendet:
- Amin A1:: Ditalgfettdimethylammoniumchlorid (Arquad^{®} HC, Akzo Chemicals)
- Amin A2:: Ditalgfettmethylamin (Armeen^{®} M2HT, Akzo Chemicals)
- Amin A3:: Hydroabietylamin (Amine D, Hercules)

**Tabelle 1**

| Bsp | Variante | x g | Verb. I | y g | Amin A | H | C | L | FAE | Lasur |
|---|---|---|---|---|---|---|---|---|---|---|
| 5 | A | 5,1 | Ia' | 3,1 | A3 | 94,9 | 88,3 | 90,2 | 82 | - 20,3 |
| 6 | B | 5,1 | Ia' | 3,1 | A1 | 94,9 | 88,2 | 89,7 | 80 | - 23,5 |
| 7 | C | 5,9 | Ia' | 3,1 | A2 | 94,6 | 88,2 | 89,8 | 85 | -19,7 |
| 8 | B | 2,3 | Ia" | - | - | 93,7 | 88,0 | 89,5 | 90 | -18,2 |
| 9 | A | 7,3 | Ia"' | - | - | 93,9 | 88,1 | 89,7 | 90 | -10,6 |
| 10 | A | 7,3 | Ib' | 3,1 | A3 | 94,0 | 87,9 | 89,6 | 83 | - 20,1 |
| Vgl. | A | - | - | - | - | 93,0 | 87,7 | 89,2 | 100 | - |

**Tabelle 2**

| Bsp | Variante | x g | Vorst. V | u g TPSA | w g AC | H | C | L | FAE | Lasur |
|---|---|---|---|---|---|---|---|---|---|---|
| 11 | D | 14,3 | Ia' | 422 | 112 | 95,2 | 88,4 | 90,3 | 73 | - 24,8 |
| 12 | D | 15,8 | Ia" | 450 | 117 | 93,8 | 88,1 | 89,5 | 87 | - 15,8 |
| 13 | D | 17,5 | Ia"' | 440 | 112- | 94,5 | 88,2 | 89,8 | 83 | - 18,1 |
| 14 | D | 18,1 | Ib' | 428 | 112 | 93,7 | 88,0 | 89,4 | 86 | -17,9 |
| Vgl. | A | - | - | - | - | 93,0 | 87,7 | 89,2 | 100 | - |

## Patentansprüche

1. Verwendung von Verbindungen der allgemeinen Formel I 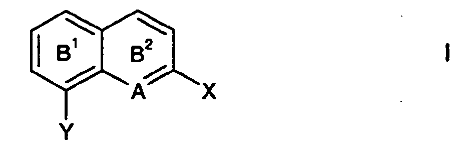 in der die Variablen folgende Bedeutung haben:
A =N- oder =CH-;
X für den Fall, daß A für =N- steht, Methyl oder einen Rest der Formel IIa 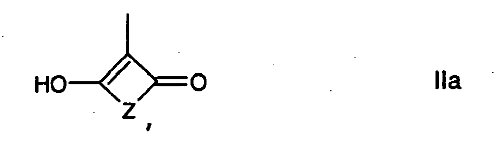 und für den Fall, daß A für =CH- steht, einen Rest R;
Y einen Rest R oder einen Rest der Formel IIb 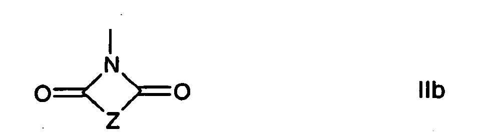 wobei entweder X für einen Rest der Formel IIa oder Y für einen Rest der Formel IIb steht;
R Wasserstoff, Halogen, C₁-C₄-Alkyl, -SO₃H, -SO₃⁻ Me⁺, -SO₃⁻ N⁺R¹R²R³R⁴, -SO₂NR¹R², -CH₂NR¹R², -CH₂R⁵, -COOH, -COO⁻ N⁺R¹R²R³R⁴, -COOR⁶ oder -COR⁶;
R¹, R², R³ und R⁴ unabhängig voneinander Wasserstoff; C₁-C₂₂-Alkyl oder C₂-C₂₂-Alkenyl, dessen Kohlenstoffkette jeweils durch eine oder mehrere Gruppierungen -O-, -S-, -NR⁷-, -CO- oder -SO₂- unterbrochen sein kann und/oder das ein- oder mehrfach durch Hydroxy, Halogen, Aryl, C₁-C₄-Alkoxy und/oder Acetyl substituiert sein kann; C₃-C₈-Cycloalkyl, dessen Kohlenstoffgerüst durch eine oder mehrere Gruppierungen -O-, -S-, -NR⁷- oder -CO- unterbrochen sein kann und/oder das ein- oder mehrfach durch Hydroxy, Halogen, Aryl, C₁-C₄-Alkoxy und/oder Acetyl substituiert sein kann; Hydroabietyl, Abietyl oder Aryl; R¹ und R² bzw. R¹, R² und R³ zusammen einen das Stickstoffatom enthaltenden, 5- bis 7-gliedrigen cyclischen Rest, der weitere Heteroatome enthalten kann;
R⁵ einen Rest der Formel IIb' 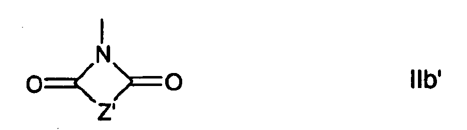
R⁶ einen der Alkylreste R¹;
R⁷ Wasserstoff oder C₁-C₄-Alkyl;
Me ein Alkalimetallion;
Z und Z' unabhängig voneinander Arylen, das durch Halogen, -SO₃H, -SO₃⁻ Me⁺, -SO₃⁻ N⁺R¹R²R³R⁴, oder C₁-C₁₂-Alkyl ein- oder mehrfach substituiert sein kann, und
die Ringe B¹ und B² unabhängig voneinander zusätzlich durch einen oder mehrere gleiche oder verschiedene der nicht Wasserstoff bedeutenden Reste R substituiert sein können,
als Kristallisationsmodifikatoren für organische Pigmente.

2. Verwendung nach Anspruch 1, **dadurch gekennzeichnet, daß** man Verbindungen der Formel la 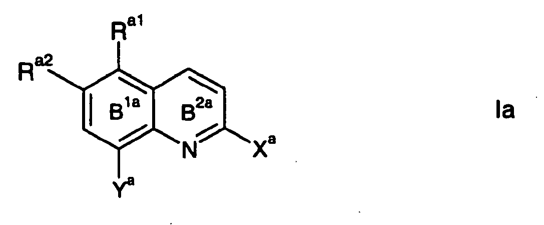 einsetzt, in der die Variablen folgende Bedeutung haben:
X^{a} Methyl oder einen Rest der Formel IIa 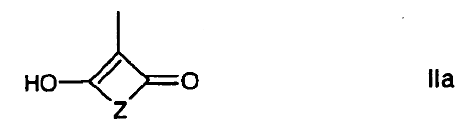
Y^{a} Wasserstoff, Halogen, C₁-C₄-Alkyl oder einen Rest der Formel IIb 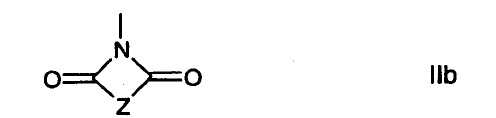 wobei entweder X^{a} für einen Rest der Formel IIa oder Y^{a} für einen Rest der Formel IIb steht;
R^{a1}, R^{a2} Wasserstoff, Halogen, C₁-C₄-Alkyl oder einen Rest D, wobei R^{a1} nur dann einen Rest D bedeuten kann, wenn X Methyl bedeutet, und R^{a2} nur dann einen Rest D bedeuten kann, wenn X einen Rest der Formel IIa bedeutet;
D -SO₃H, -SO₃⁻ Me⁺, -SO₃⁻ N⁺R¹R²R³R⁴, -SO₂NR¹R² oder -CH₂NR¹R²;
R¹, R², R³ und R⁴ unabhängig voneinander Wasserstoff; C₁-C₂₂-Alkyl oder C₂-C₂₂-Alkenyl, dessen Kohlenstoffkette jeweils durch eine oder mehrere Gruppierungen -O- oder -NR⁷- unterbrochen sein kann; Hydroabietyl, Abietyl oder Aryl;
Me ein Alkalimetallion;
Z Arylen, das durch Halogen, -SO₃H, -SO₃⁻ Me⁺, -SO₃⁻ N⁺R¹R²R³R⁴ oder C₁-C₁₂-Alkyl ein- oder mehrfach substituiert sein, und
die Ringe B^{1a} und B^{2a} unabhängig voneinander zusätzlich an von R^{a1} und R^{a2} abweichenden Positionen durch Halogen oder C₁-C₄-Alkyl substituiert sein können.

3. Verwendung nach Anspruch 1, **dadurch gekennzeichnet, daß** man Verbindungen der Formel Ib 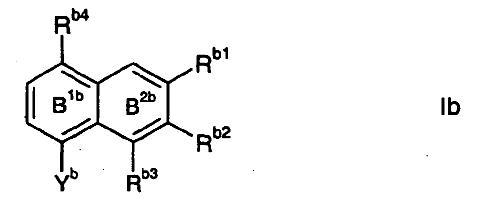 einsetzt, in der die Variablen folgende Bedeutung haben:
Y^{b} einen Rest der Formel IIb 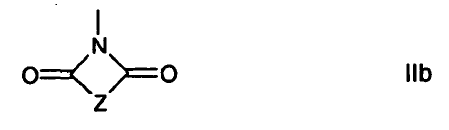
R^{b1}, R^{b2}, R^{b3}, R^{b4} Wasserstoff, Halogen, C₁-C₄-Alkyl oder einen Rest D, wobei nur einer der Reste R^{b1}, R^{b2}, R^{b3} oder R^{b4} einen Rest D bedeuten kann;
D -SO₃H, -SO₃⁻ Me⁺, -SO₃⁻ N⁺R¹R²R³R⁴, -SO₂NR¹R² oder -CH₂NR¹R²;
R¹, R², R³ und R⁴ unabhängig voneinander Wasserstoff; C₁-C₂₂-Alkyl oder C₂-C₂₂-Alkenyl, dessen Kohlenstoffkette jeweils durch eine oder mehrere Gruppierungen -O- oder -NR⁷- unterbrochen sein kann; Dehydroabietyl oder Aryl;
Me ein Alkalimetallion;
Z Arylen, das durch Halogen, -SO₃H, -SO₃⁻ Me⁺, -SO₃⁻ N⁺R¹R²R³R⁴ oder C₁-C₁₂-Alkyl ein- oder mehrfach substituiert sein kann, und
die Ringe B^{1b} und B^{2b} unabhängig voneinander zusätzlich an von R^{b1} bis R^{b4} abweichenden Positionen durch Halogen oder C₁-C₄-Alkyl substituiert sein können.

4. Verfahren zur Überführung von organischen Rohpigmenten in eine feinteilige Pigmentform, **dadurch gekennzeichnet, dass** man die Formierung des Rohpigments in Gegenwart einer oder mehrerer Verbindungen der Formel I gemäß Anspruch 1 vornimmt.

5. Verfahren nach Anspruch 4, **dadurch gekennzeichnet, daß** man das Rohpigment einer Mahlung und/oder einer Rekristallisation aus organischem oder wäßrig/organischem Lösungsmittel in Gegenwart einer oder mehrerer Verbindungen der Formel I unterzieht.

6. Verfahren nach Anspruch 4 oder 5, **dadurch gekennzeichnet, daß** man das Rohpigment bereits in Gegenwart einer oder mehrerer Verbindungen der Formel I herstellt.

7. Verfahren nach den Ansprüchen 4 bis 6, **dadurch gekennzeichnet, daß** man das Rohpigment und die Verbindung der Formel I parallel in situ herstellt und die anfallende Mischung der Formierung zuführt.

8. Verfahren nach den Ansprüchen 4 bis 7, **dadurch gekennzeichnet, daß** man ein Rohpigment aus der Reihe der Chinophthalone einsetzt.

9. Pigmentzubereitungen, enthaltend
A) mindestens ein organisches Pigment und
B) mindestens eine Verbindung der Formel I gemäß Anspruch 1.

10. Pigmentzubereitungen nach Anspruch 9, die als organisches Pigment (A) ein Pigment aus der Reihe der Chinophthalone enthalten.

11. Verbindungen der allgemeinen Formel I' 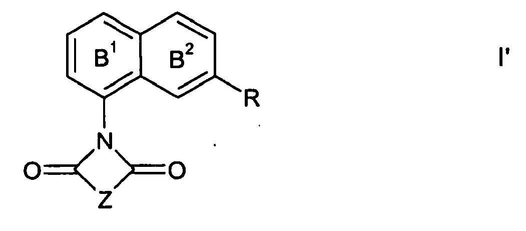 in der die Variablen folgende Bedeutung haben:
R Wasserstoff, Halogen, C₁-C₄-Alkyl, -SO₃H, -SO₃⁻ Me⁺, -SO₃⁻ N⁺R¹R²R³R⁴, -SO₂NR¹R², -CH₂NR¹R², -CH₂R⁵, -COOH, -COO⁻ N⁺R¹R²R³R⁴, -COOR⁶ oder -COR⁶;
R¹, R², R³ und R⁴ unabhängig voneinander Wasserstoff; C₁-C₂₂-Alkyl oder C₂-C₂₂-Alkenyl, dessen Kohlenstoffkette jeweils durch eine oder mehrere Gruppierungen -O-, -S-, -NR⁷-, -CO- oder -SO₂- unterbrochen sein kann und/oder das ein- oder mehrfach durch Hydroxy, Halogen, Aryl, C₁-C₄-Alkoxy und/oder Acetyl substituiert sein kann; C₃-C₈-Cycloalkyl, dessen Kohlenstoffgerüst durch eine oder mehrere Gruppierungen -O-, -S-, -NR⁷- oder -CO- unterbrochen sein kann und/oder das ein- oder mehrfach durch Hydroxy, Halogen, Aryl, C₁-C₄-Alkoxy und/oder Acetyl substituiert sein kann; Hydroabietyl, Abietyl oder Aryl; R¹ und R² bzw. R¹, R² und R³ zusammen einen das Stickstoffatom enthaltenden, 5- bis 7-gliedrigen cyclischen Rest, der weitere Heteroatome enthalten kann;
R⁵ einen Rest der Formel IIb' 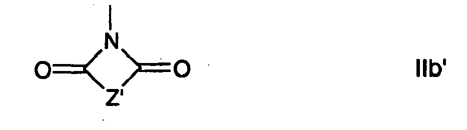
R⁶ einen der Alkylreste R¹;
R⁷ Wasserstoff oder C₁-C₄-Alkyl ;
Me ein Alkalimetallion;
Z und Z' , unabhängig voneinander Arylen, das durch Halogen, -SO₃H -SO₃⁻ Me⁺, -SO₃⁻ N⁺R¹R²R³R⁴ oder C₁-C₁₂-Alkyl ein- oder mehrfach substituiert sein kann, und
die Ringe B¹ und B² unabhängig voneinander zusätzlich durch einen oder mehrere gleiche oder verschiedene der nicht Wasserstoff bedeutenden Reste R substituiert sein können, wobei, für den Fall, daß A für =CH- steht, mindestens einer der beiden Ringe mindestens durch einen nicht Wasserstoff bedeutenden Rest R substituiert ist.

## Claims

1. The use of compounds of the general formula I 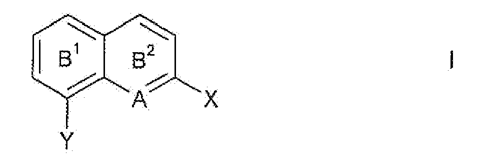 where
A is =N- or =CH-;
X when A is =N- is methyl or a radical of the formula IIa 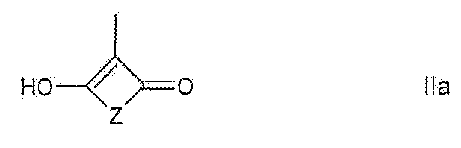 or when A is =CH- is an R radical;
Y is an R radical or a radical of the formula IIb 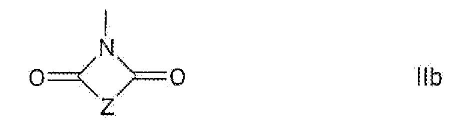 with either X being a radical of the formula IIa or Y being a radical of the formula IIb;
R is hydrogen, halogen, C₁-C₄-alkyl, -SO₃H, -SO₃⁻ Me⁺, -SO₃⁻ N⁺R¹R²R³R⁴, -SO₂NR¹R², -CH₂NR¹R², -CH₂R⁵, -COOH, -COO⁻ N⁺R¹R²R³R⁴, -COOR⁶ or COR⁶ ;
R¹, R², R³ and R⁴ are each independently hydrogen; C₁-C₂₂-alkyl or C₂-C₂₂-alkenyl whose carbon chain may in either case be interrupted by one or more -O-, -S-, -NR⁷-, -CO- or -SO₂- moieties and/or which may be substituted by one or more of hydroxyl, halogen, acryl C₁-C₄-alkoxy and acetyl; C₃-C₈-cycloalkyl whose carbon skeleton may be interrupted by one or more -O-, -S-, -NR⁷- or -CO- moieties and/or which may be substituted by one or more of hydroxy, Halogen, aryl, C₁-C₄-alkoxy and acetyl; hydroabietyl, abietyl or aryl ; R¹ and R² or R¹, R² and R³ may combine to form a 5- to 7-membered cyclic radical which comprises the nitrogen atom and may comprise further hetero atoms;
R⁵ is a radical of the formula IIb' 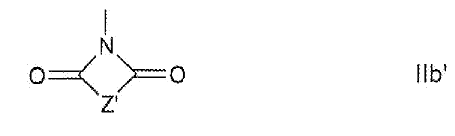
R⁶ is one of the R¹ alkyl radicals;
R⁷ is hydrogen or C₁-C₄-alkyl ;
Me is an alkali metal ion;
Z and Z¹ are each independently arylene which may be substituted by one or more of Halogen, -SO₃H, -SO₃⁻ Me⁺, -SO₃⁻ N⁺R¹R²R³R⁴, and C₁-C₁₂-alkyl, and
the rings B¹ and B² may each be independently additionally substituted by one or more identical or different R radicals other than hydrogen,
as crystallization modifiers for organic pigments.

2. The use according to claim 1, utilizing compounds of the formula Ia 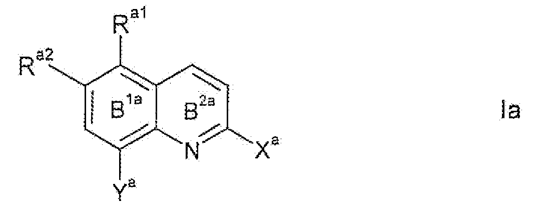 where
X^{a} is methyl or a radical of the formula IIa 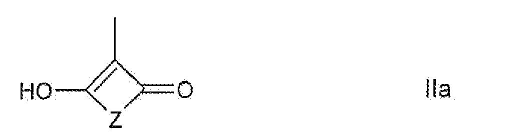
Y^{a} is hydrogen, halogen, C₁-C₄-alkyl or a radical of the formula IIb 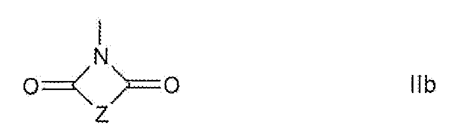 with either X^{a} being a radical of the formula IIa or Y^{a} being a radical of the formula IIb;
R^{a1}, R^{a2} are each hydrogen, Halogen, C₁-C₄-alkyl or a D radical, although R^{a1} can be a D radical only when X is methyl and R^{a2} can be a D radical only when X is a radical of the formula IIa;
D is -SO₃H, -SO₃⁻ Me⁺, -SO₃⁻ N⁺R¹R²R³R⁴, -SO₂NR¹R² or -CH₂NR¹R² ;
R¹, R², R³ and R⁴ are each independently hydrogen; C₁-C₂₂-alkyl or C₂-C₂₂-alkenyl whose carbon chain may in each case be interrupted by one or more -O- or -NR⁷- moieties; hydroabietyl, abietyl or aryl ;
Me is an alkali metal ion;
Z is arylene which may be substituted by one or more of halogen, -SO₃H, -SO₃⁻ Me⁺, -SO₃⁻ N⁺R¹R²R³R⁴ and C₁-C₁₂-alkyl, and
the rings B^{1a} and B^{2a} may each be independently additionally substituted by halogen or C₁-C₄-alkyl at different positions than R^{a1} and R^{a2}.

3. The use according to claim 1, utilizing compounds of the formula Ib 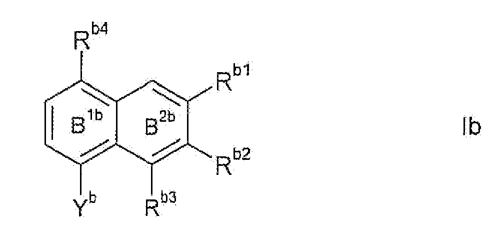 where
Y^{b} is a radical of the formula IIb 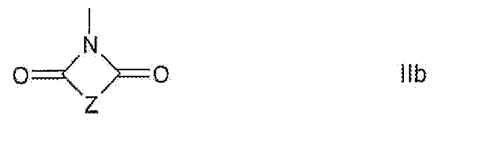
R^{b1}, R^{b2}, R^{b3} and R^{b4} are each hydrogen, Halogen, C₁-C₄-alkyl or a D radical, although only one of R^{b1}, R^{b2}, R^{b3} and R^{b4} can be a D radical;
D is -SO₃H, -SO₃⁻ Me⁺, -SO₃⁻ N⁺R¹R²R³R⁴, -SO₂NR¹R² or -CH₂NR¹R² ;
R¹, R², R³ and R⁴ are each independently hydrogen ; C₁-C₂₂-alkyl or C₂-C₂₂-alkenyl whose carbon chain may in each case be interrupted by once or more -O- or -NR⁷- moieties; dehydroabietyl or acryl ;
Me is an alkali metal ion;
Z is arylene which may be substituted by one or more of Halogen, -SO₃H, -SO₃⁻ Me⁺, -SO₃⁻ N⁺R¹R²R³R⁴ and C₁-C₁₂-alkyl, and
the rings B^{1b} and B^{2b} may each be independently additionally substituted by halogen or C₁-C₄-alkyl at different positions than R^{b1} to R^{b4}.

4. A process for conversing a crude organic pigment into a finely divided pigmentary form, which comprises finishing said crude pigment in the presence of one or more compounds of the formula I according to claim 1.

5. The process according to claim 4 wherein said crude organic pigment is subjected to a grinding and/or a recrystallization from organic or aqueous organic solvent in the presence of one or more compounds of the formula I.

6. The process according to claim 4 or 5 wherein said crude organic pigment is synthesized in the pretence of one or more compounds of the formula I.

7. The process according to any of claims 4 to 6 wherein said crude organic pigment and the compound of the formula I are concurrently synthesizes in situ and the mixture produced is finished.

8. The process according to any of claims 4 to 7 wherein said crude organic pigment is a quinophthalone.

9. Pigment preparations comprising
A) at least one organic pigment, and
B) at least one compound of the formula I as per claim 1.

10. The pigment preparations according to claim 9 wherein said at least one organic pigment (A) comprises a quinophthalone Pigment.

11. Compounds of the general formula I' 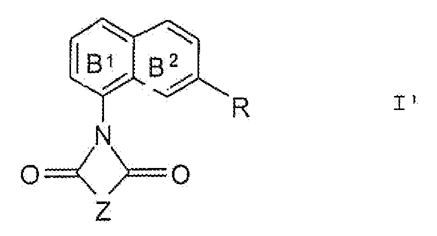 where
R is hydrogen, halogen, C₁-C₄-alkyl, -SO₃H, -SO₃⁻ Me⁺, -SO₃⁻ N⁺R¹R²R³R⁴, -SO₂NR¹R², -CH₂NR¹R², -CH₂R⁵, -COOH, -COO⁻ N⁺R¹R²R³R⁴, -COOR⁶ or -COR⁶;
R¹, R², R³ and R⁴ are each independently hydrogen; C₁-C₂₂-alkyl or C₂-C₂₂-alkenyl whose carbon chain may in either case be interrupted by one or more -O-, -S-, -NR⁷-, -CO- or -SO₂- moieties and/or which may be substituted by one or more of hydroxyl, halogen, aryl, C₁-C₄-alkoxy and acetyl; C₃-C₈-cycloalkyl whose carbon skeleton may be interrupted by one or more -O-, -S- -NR⁷- or -CO- moieties and/or which may be substituted by one or more of hydroxyl, halogen, aryl, C₁-C₄-alkoxy and acetyl; hydroabietyl, abietyl or aryl; R¹ and R² or R¹, R² and R³ may combine to form a 5- to 7-membered cyclic radical which comprises the nitrogen atom and may comprise further hetero atoms;
R⁵ is a radical of the formula IIb' 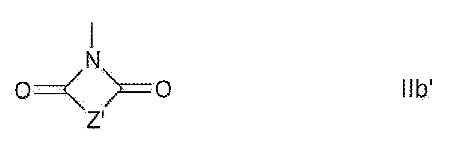
R⁶ is one of the R¹ alkyl radicals;
R⁷ is hydrogen or C₁-C₄-alkyl;
Me is an alkali metal ion;
Z and Z' are each independently arylene which may be substituted by one or more of halogen, -SO₃H, -SO₃⁻ Me⁺, -SO₃⁻ N⁺R¹R²R³R⁴ and C₁-C₁₂-alkyl, and
the rings B¹ and B² may each be independently additionally substituted by one or more identical or different R radicals other than hydrogen with the proviso that when A is =CH-, at least one of the two rings is substituted by at least one R radical other than hydrogen.

## Revendications

1. Utilisation de composés de formule générale I 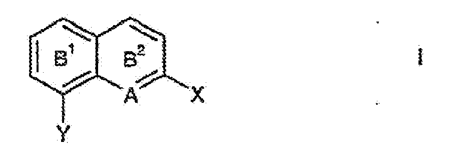 dans laquelle les variables ont les significations suivantes :
A représente =N- ou =CH- ;
X dans le cas où A est =N-, représente le groupe méthyle ou un radical de formule IIa 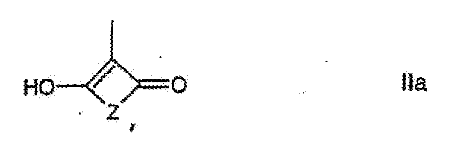 et dans le cas où A est =CH-, représente un radical R ;
Y représente un radical R ou un radical de formule IIb 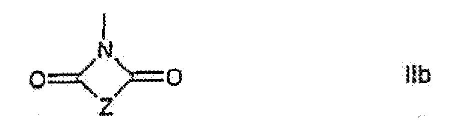 soit X représentant un radical de formule IIa, soit Y représentant un radical de formule IIb ;
R représente un atome d'hydrogène ou d'halogène, un groupe alkyle en C₁-C₄, -SO₃H, -SO₃ Me⁺ , -SO₃⁻N⁺R¹R²R³R⁴, -SO₂NR¹R², -CH₂NR¹R², -CH₂R⁵, -COOH, -COO⁻N⁺R¹R²R³R⁴, -COOR⁶ ou -COR⁶ ;
R¹, R², R³ et R⁴ représentent, indépendamment les uns des autres, un atome d'hydrogène ; un groupe alkyle en C₁-C₂₂ ou alcényle en C₂-C₂₂, dont la chaîne carbonée peut dans chaque cas être interrompue par un ou plusieurs groupements -O-, -S-, -NR⁷-, -CO- ou -SO₂- et/ou qui peut être une ou plusieurs fois substitué par hydroxy, halogène, aryle, alcoxy en C₁-C₄ et/ou acétyle ; un groupe cycloalkyle en C₃-C₈ dont le squelette carboné peut être interrompu par un ou plusieurs groupements -O-, -S-, -NR⁷- ou -CO- et/ou qui peut être une ou plusieurs fois substitué par hydroxy, halogène, aryle, alcoxy en C₁-C₄ et/ou acétyle ; un groupe hydroabiétyle, abiétyle ou aryle ; R¹ et R² ou, respectivement, R¹, R² et R³ forment ensemble un radical cyclique à 5-7 chaînons, comprenant l'atome d'azote, qui peut contenir d'autres hétèroatomes ;
R⁵ représente un radical de formule IIb' 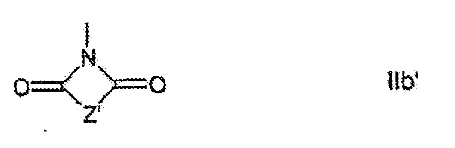
R⁶ représente l'un des radicaux aryle R¹ ;
R⁷ représente un atome d'hydrogène ou un groupe alkyle en C₁-C₄ ;
Me représente un ion de métal alcalin ;
Z et Z' représentent, indépendamment l'un de l'autre, un groupe arylène qui peut être une ou plusieurs fois substitué par halogène, -SO₃, H, -SO₃⁻Me⁺, -SO₃⁻N⁺R¹R²R³R⁴ ou alkyle en C₁-C₁₂, et
les cycles B¹ et B² peuvent en outre, indépendamment l'un de l'autre, être substitués par un ou plusieurs radicaux R identiques ou différents, ne représentant pas un atome d'hydrogène,
en tant que modificateurs de cristallisation pour des pigments organiques.

2. Utilisation selon la revendication 1, **caractérisée en ce qu'**on utilise des composés de formule Ia 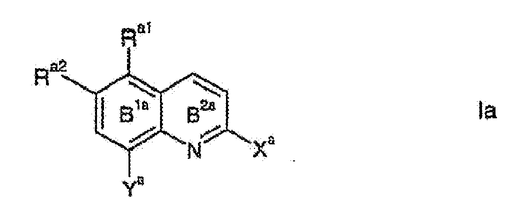 dans laquelle, les variables ont les significations suivantes :
X^{a} représente le groupe méthyle ou un radical de formule IIa 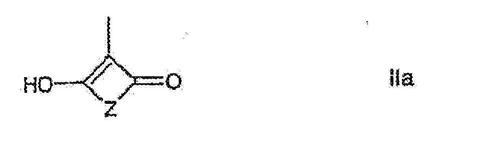
Y^{a} représente un atome d'hydrogène ou d'halogène, un groupe alkyle en C₁-C₄ ou un radical de formule IIb 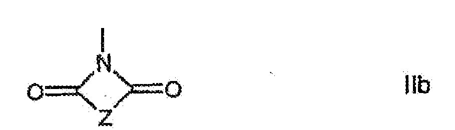 soit X^{a} représentant un radical de formule IIa, soit Y^{a} représentant un radical de formule IIb ;
R^{a1} R^{a2} représentent un atome d'hydrogène ou d'halogène, un groupe alkyle en C₁-C₄ ou un reste D, R^{a1} ne pouvant que représenter un reste D lorsque X représente le groupe méthyle, et R^{a2} ne pouvant que représenter un reste D lorsque X représente un radical de formule IIa ;
D représente -SO₃H, -SO₃⁻Me⁺ -SO₃⁻ N⁺R¹R²R³R⁴, -SO₂NR¹R² ou -CH₂NR¹R² ;
R¹, R², R³ et R⁴ représentant, indépendamment les uns des autres, un atome d'hydrogène ; un groupe alkyle en C₁-C₂₂ ou alcényle en C₂-C₂₂, dont la chaîne carbonée peut dans chaque cas être interrompue par un ou plusieurs groupement -O- ou -NR⁷-; un groupe hydroabiétyle, abiétyle ou aryle ;
Me représente un ion de métal alcalin ;
Z représente un groupe arylène qui peut être une ou plusieurs fois substitué par halogène, -SO₃H, -SO₃⁻Me⁺, -SO₃⁻N⁺R¹R²R³R⁴ ou alkyle en C₁-C₁₂, et
les cycles B^{1a} et B^{2a} peuvent en outre, indépendamment l'un de l'autre, être substitués par halogène ou alkyle en C₁-C₄ en des positions différentes de R^{a1} et R^{a2}.

3. Utilisation selon la revendication 1, **caractérisée en ce qu'**on utilise des composés de formule Ib 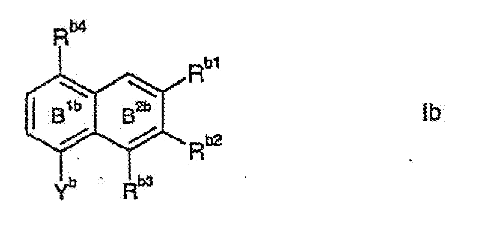 dans laquelle les variables ont les significations suivante :
Y^{b} représente un radical de formule IIb 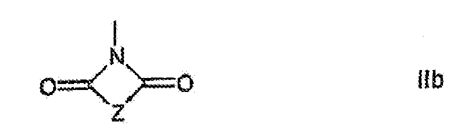
R^{b1}, R^{b2}, R^{b3}, R^{b4} représentent un atome d'hydrogène ou d'halogène, un groupe alkyle en C₁-C₄ ou un reste D, seul l'un des radicaux R^{b1}, R^{b2}, R^{b3} et R^{b4} pouvant représenter un reste D ;
D représente -SO₃H, -SO₃⁻Me⁺, -SO₃⁻N⁺R¹R²R³R⁴, -SO₂NR¹R² ou -CH₂NR¹R² ;
R¹, R², R³ et R⁴ représentent, indépendamment les uns des autres, un atome d'hydrogène un groupe alkyle en C₁-C₂₂ ou alcényle en C₂-C₂₂, dont la chaîne carbonée peut dans chaque cas être interrompue par un ou plusieurs groupements -O- ou -NR⁷- ; un groupe déhydroabiétyle ou aryle ;
Me représente un ion de métal alcalin ;
Z représente un groupe arylène qui peut être une ou plusieurs fois substitué par halogène, -SO₃H, -SO₃⁻Me⁺, -SO₃⁻N⁺R¹R²R³R⁴ ou alkyle en C₁-C₁₂, et
les cycles B^{1b} et B^{2b} peuvent en outre, indépendamment l'un de l'autre, être substitués par halogène ou alkyle en C₁-C₄ en des positions différentes de R^{b1} à R^{b4}.

4. Procédé pour la conversion de pigmentes organiques bruts en une forme de pigment finement divisée, **caractérisé en ce qu'**on effectue la mise en forme du pigment brut en présence d'un ou plusieurs composés de formule I selon la revendication 1.

5. Procédé selon la revendication 4, **caractérisé en ce qu'**on soumet le pigment brut à un broyage et/ou à une recristallisation dans un solvant organique ou aqueux-organique en présence d'un ou plusieurs composés de formule I.

6. Procédé selon la revendication 4 ou 5, **caractérisé en ce qu'**on prépare le pigment brut déjà en présence d'un ou plusieurs composés de formule I.

7. Procédé selon les revendications 4 à 6, **caractérisé en ce qu'**on prépare le pigment brut et le composé de formule I en parallèle in situ et on envoie à la mise en forme le mélange produit.

8. Procédé selon les revendications 4 à 7, **caractérisé en ce qu'**on utilise un pigment brut de la série des quinophtalones.

9. Préparations de pigments, contenant
A) au moins un pigment organique et
B) au moins un composé de formule I selon la revendication 1.

10. Préparations de pigments selon la revendication 9, qui contiennent en tant que pigment organique (A) un pigment de la série des quinophtalones.

11. Composés de formule générale I' 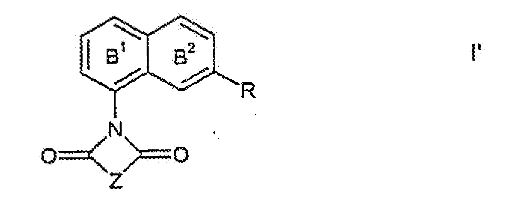 dans laquelle les variables ont les significations suivantes :
R représente un atome d'hydrogène ou d'halogène, un groupe alkyle en C₁-C₄, -SO₃H, -SO₃⁻ Me⁺ -SO₃⁻ N⁺ R¹R²R³R⁴, -SO₂NR¹R², -CH₂NR¹R², -CH₂R⁵, -COOH, -COO⁻N⁺R¹R²R³R⁴, -COOR⁶ ou -COR⁶ ;
R¹, R², R³ et R⁴ représentant, indépendamment les uns des autres, un atome d'hydrogène ; un groupe alkyle en C₁-C₂₂ ou alcényle en C₂-C₂₂, dont la chaîne carbonée peut dans chaque cas être interrompue par un ou plusieurs groupements -O-, -S-, -NR⁷-, -CO- ou -SO₂- et/ou qui peut être une ou plusieurs fois substitué par hydroxy, halogène, aryle, alcoxy en C₁-C₄ et/ou acétyle ; un groupe cycloalkyle en C₃-C₈ dont le squelette carboné peut être interrompu par un ou plusieurs groupements -O-, -S-, -NR⁷- ou -CO- et/ou qui peut être une ou plusieurs fois substitué par
hydroxy, halogène, aryle, alcoxy en C₁-C₄ et/ou acétyle ; un groupe hydroabiétyle, abiétyle ou aryle ; R¹ et R² ou, respectivement, R¹, R² et R³ forment ensemble un radical cyclique à 5-7 chaînions, comprenant l'atome d'azote, qui peut contenir d'autres hétéroatomes ;
R⁵ représente un radical de formule IIb' 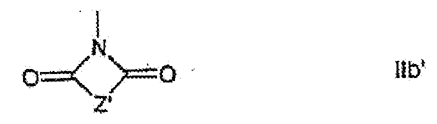
R⁶ représente l'un des radicaux aryle R¹ ;
R⁷ représente un atome d'hydrogène ou un groupe alkyle en C₁-C₄ ;
Me représente un ion de métal alcalin ;
Z et Z' représentent, indépendamment l'un de l'autre, un groupe arylène qui peut être une ou plusieurs fois substitué par halogène, -SO₃H, -SO₃⁻Me⁺, -SO₃⁻N⁺R¹R²R³R⁴ ou alkyle en C₁-C₁₂, et
les cycles B¹ et B² peuvent en outre, indépendamment l'un de l'autre, être substitués par un ou plusieurs radicaux R identiques ou différents, ne représentant pas un atome d'hydrogène, dans le cas où A représente =CH-, au moins l'un des deux cycles pouvant être substitué par un radical R ne représentant pas un atome d'hydrogène.
